# EUROPEAN PATENT APPLICATION

(11) **EP 3 072 748 A1**
(43) Date of publication of application: **28.09.2016**
(21) Application number: 16000619.3
(22) Date of filing: 15.03.2016
(51) Int. Cl.: B60R 16/02, H02G 3/04, H02G 3/00

(54) **PROTECTOR, ASSEMBLY OF WIRE WITH PROTECTOR, AND ASSEMBLING METHOD THEREFOR**

(30) Priority: 26.03.2015 JP 2015063811
(71) Applicant: Sumitomo Wiring Systems, Ltd., Yokkaichi City Mie 510 (JP)
(72) Inventor: Fujita, Tetsuya, Yokkaichi-City, MIE, 510-8503 (JP); Watanabe, Masaru, Yokkaichi-City, MIE, 510-8503 (JP); Arai, Kaho, Yokkaichi-City, MIE, 510-8503 (JP)
(74) Representative: Müller-Boré & Partner Patentanwälte PartG mbB

(57) **Abstract**

It is aimed to enable a wire to be easily and reliably positioned and fixed in a protector.

A protector 20 includes a wire accommodating portion 22 and a wire fixing piece 40. The wire accommodating portion 22 is formed with an accommodation space capable of accommodating wires 12 and a wire draw-out port 23 for drawing out the wires 12 accommodated in the accommodation space to outside. A wire fixing piece 40 is formed separately from the wire accommodating portion 22 and unitable with the wire draw-out port 23 in a state fixed at a certain position in an extending direction of the wires 12 by a binding member 18.

## Description

The present invention relates to a protector for protecting a wire, to an assembly of a wire and protector and to an assembling method therefor.

Japanese Unexamined Patent Publication No. 2012-85478 discloses a configuration for forming tape winding pieces on opposite ends of a protector. In patent literature 1, a wiring harness is fixed to the protector by winding an adhesive tape on the wiring harness and the tape winding pieces.

Japanese Unexamined Patent Publication No. 2012-100460 discloses a technology for inserting a base end part of a branch line into a slit of a rubber member and fitting this rubber member into a branch line accommodating portion of a protector to fix the rubber member.

However, according to the technology disclosed Japanese Unexamined Patent Publication No. 2012-85478, the adhesive tape winding operation needs to be performed with the wiring harness accommodated in a main body of the protector and the tape winding pieces are integrally formed to the main body of the protector. Thus, the tape winding operation is difficult depending on extending directions of the tape winding pieces.

Further, according to the technology disclosed in Japanese Unexamined Patent Publication No. 2012-100460, since a branch line holding force depends on a frictional force between the rubber member and the branch line, there is a problem of a weak holding force. Thus, if the branch line is pulled such as when the wiring harness is assembled in a vehicle, the branch line may be displaced relative to the rubber member.

Accordingly, the present invention aims to enable a wire to be easily and reliably positioned and fixed in a protector.

This object is solved according to the invention by the features of the independent claims. Particular embodiments of the invention are subject of the dependent claims.

According to one aspect, there is provided a protector which includes a wire accommodating portion formed with an accommodation space capable of at least partly accommodating at least one wire and a wire draw-out port for drawing out the wire accommodated in the accommodation space to outside, and at least one wire fixing piece formed separately from the wire accommodating portion and unitable with the wire draw-out port in a state fixed at a certain (predetermined or predeterminable) position in an extending direction of the wire by at least one binding member.

Accordingly, the wire fixing piece can be fixed to the wire accommodating portion after the wire is fixed to the wire fixing piece by the binding member. Thus, the wire can be easily and reliably positioned and fixed in or to the protector.

According to a particular embodiment, the wire fixing piece is unitable with or fixable to the wire accommodating portion at a position where at least a part of the binding member for binding and fixing the wire and the wire fixing piece is arranged in the wire accommodating portion.

Accordingly, the binding member can be protected since at least the part of the binding member is arranged in the wire accommodating portion.

Particularly, the wire accommodating portion includes a protector main body portion with a base plate portion (particularly a bottom plate portion) and one or more, particularly a pair of side wall portions standing from (particularly substantially opposite sides of) the base (bottom) plate portion, and a lid portion to be mounted on the protector main body portion to at least partly close an opening of the protector main body, particularly substantially facing the base (bottom) plate portion.

Accordingly, the wire can be easily accommodated into the protector main body portion through the opening facing the bottom plate portion. By closing the opening with the lid portion, the wire and at least the part of the binding member can be protected.

Further particularly, the wire fixing piece includes a bound portion to be bound and fixed to the wire and a wide portion wider than the bound portion, at least one fixing projecting portion is formed on one of a side part of the wide portion and the wire accommodating portion and a wire fixing recess, in which the fixing projecting portion is arrangeable, is formed on the other.

Accordingly, the wire fixing piece can be fixed to the wire accommodating portion particularly by arranging the fixing projecting portion formed on the one of the side part of the wide portion and the wire accommodating portion in the wire fixing recess formed on the other with the bound portion and the wire bound and fixed. At this time, it is sufficient to arrange the fixing projecting portion in the wire fixing recess formed on the side part of the wide portion wider than the bound portion, wherefore a fixing operation by this arranging operation can be easily performed.

Further particularly, a plurality of the wire fixing pieces are provided, and the plurality of wire fixing pieces are unitable or fixable substantially side by side with the wire draw-out port.

Accordingly, an operation of binding and fixing the wire can be easily performed and the wire can be more reliably fixed since the wire can be bound and fixed to each of the plurality of wire fixing pieces.

Further particularly, an integrated wire fixing piece is further provided which is integrally formed to the wire draw-out port.

Further particularly, the wire fixing piece is unitable with the wire draw-out port on a side adjacent to the integrated wire fixing piece.

Accordingly, the operation of binding and fixing the wire can be easily performed and the wire can be more reliably fixed, since the wire can be bound and fixed to each of the integrated wire fixing piece and the wire fixing piece.

According to a further aspect, there is provided an assembly of wire with protector which includes a protector according to the above aspect of a particular embodiment thereof, a wire and a binding member for binding and fixing the wire and the wire fixing piece, and the wire fixing piece at least partly is accommodated in the accommodation space in a state where the wire fixing piece is united with the wire draw-out port and the wire is drawn out to outside from the wire draw-out port.

According to a further aspect of the invention, there is provided a method of assembling a wire with a protector (i.e. producing an assembly of a wire with protector), in particular according to the above aspect or a particular embodiment thereof, comprising: binding and fixing at least one wire to at least one wire fixing piece of the protector; at least partly accommodating the wire fixing piece in an accommodation space of the protector thereby uniting the wire fixing piece with the wire draw-out port of the protector; and drawing out the wire to outside from the wire draw-out port.

According to a particular embodiment, the wire fixing piece is united with the wire accommodating portion at a position where at least a part of the binding member for binding and fixing the wire and the wire fixing piece is arranged in the wire accommodating portion.

Particularly, in the accommodating step the wire at least partly is enclosed by a protector main body portion with a base plate portion and one or more side wall portions standing from the base plate portion; and a lid portion is mounted on the protector main body portion to at least partly close an opening of the protector main body portion.

Further particularly, the wire fixing piece includes a bound portion to be bound and fixed to the wire and a wide portion wider than the bound portion; and wherein at least one fixing projecting portion is formed on one of a side part of the wide portion and the wire accommodating portion and a wire fixing recess, in which the fixing projecting portion is arrangeable, is formed on the other.

Further particularly, the method further comprises providing a plurality of the wire fixing pieces; and uniting the plurality of wire fixing pieces substantially side by side with the wire draw-out port.

Further particularly, the method further comprises integrally or unitarily forming an integrated wire fixing piece to the wire draw-out port.

Further particularly, the wire fixing piece is united with the wire draw-out port on a side adjacent to the integrated wire fixing piece.

According to the above, the wire fixing piece can be fixed to the wire accommodating portion after the wire is fixed to the wire fixing piece by the binding member. Thus, the wire can be easily and reliably positioned and fixed in the protector.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view showing wires with protector according to an embodiment,
FIG. 2 is an exploded perspective view showing the protector,
FIG. 3 is a plan view showing a protector main body portion,
FIG. 4 is a plan view showing a wire fixing piece,
FIG. 5 is a plan view showing a lid portion,
FIG. 6 is a diagram showing a manufacturing process of the wires with protector,
FIG. 7 is a diagram showing the manufacturing process of the wires with protector,
FIG. 8 is a diagram showing a protector according to a first modification, and
FIG. 9 is a diagram showing a protector according to a second modification.

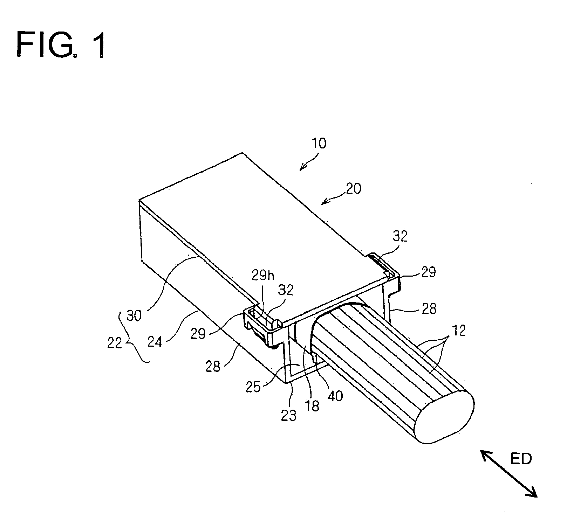

Hereinafter, a protector 20 and one or more wires with protector 10 according to a particular embodiment are described. FIG. 1 is a perspective view showing the wires with protector 10. Note that one end part of the protector 20 is shown, but the other end part is not shown in FIG. 1 and each of other figures.

The one or more wires with protector 10 include the protector 20, one or more wires 12 and at least one binding member 18.

The wire 12 particularly is such that an insulation coating is formed around a core which is a conductive wire. The wire 12 particularly can supply power and/or transmit a signal. Here, the wires with protector 10 particularly include a plurality of wires 12. The plurality of wires 12 at least partly may be branched in parts accommodated in the protector 20 and/or outside the protector 20. If the plurality of wires 12 at least partly are branched in the parts accommodated in the protector 20, the protector 20 may have an opening for allowing the part(s) branched at an intermediate part in an extending direction of the protector 20 to be extended to outside.

Connectors are mounted on (particularly end parts of) the plurality of wires 12. The respective connectors are or may be connected to various electrical components mounted in a vehicle with the wires with protector 10 assembled in the vehicle. Specifically, the plurality of wires 12 are used as a wiring harness which is a wiring material in the vehicle. An optical fiber cable may be bundled together with the wires 12. Here is described an example in which the protector 20 at least partly accommodates substantially linearly bound parts of the plurality of wires 12.

The protector 20 at least partly accommodates parts of (particularly the substantially linear parts of) the plurality of wires 12. The plurality of wires 12 are drawn out to outside through at least one wire draw-out port 23 on one end part of the protector 20. The other end part of the protector 20 may be configured similarly to the wire draw-out port 23 described here or may be so configured that a wire fixing piece is integrally or unitarily formed as before.

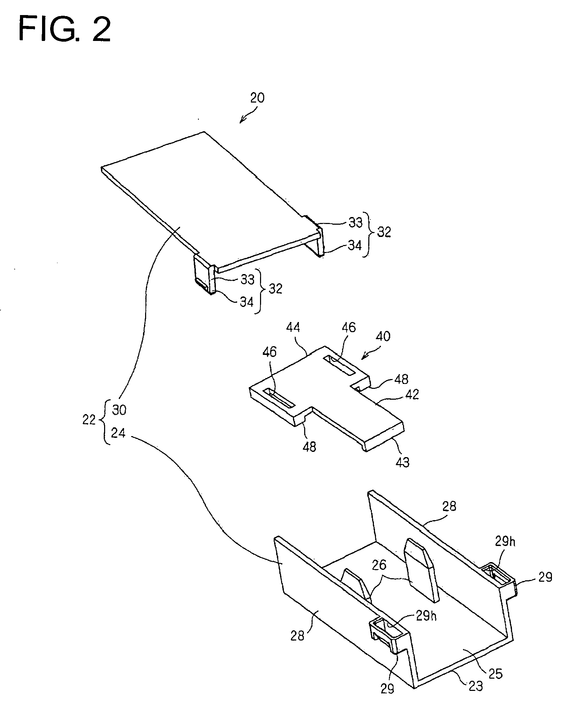

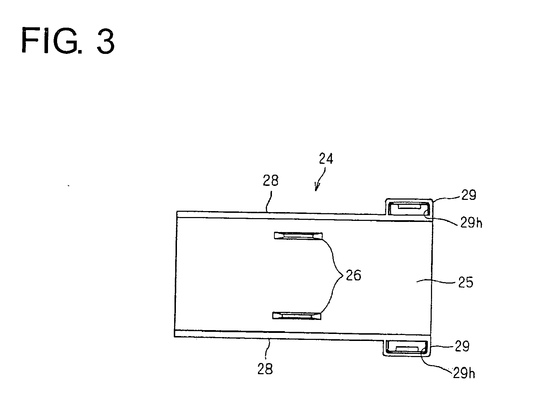

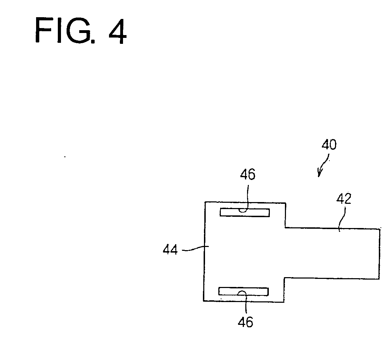

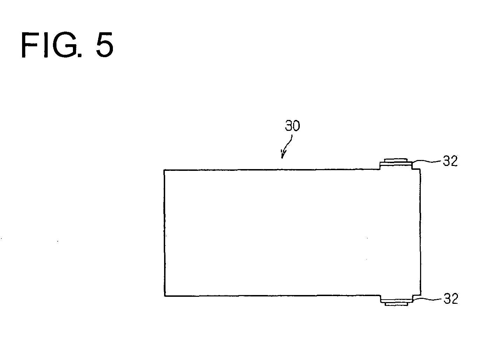

FIG. 2 is an exploded perspective view showing the protector 20, FIG. 3 is a plan view showing a protector main body portion 24, FIG. 4 is a plan view showing a wire fixing piece 40 and FIG. 5 is a plan view showing a lid portion 30.

The protector 20 includes at least one wire accommodating portion 22 and the at least one wire fixing piece 40.

The wire accommodating portion 22 particularly substantially is formed into a tubular shape; here specifically into a rectangular or polygonal tubular shape. Although the wire accommodating portion 22 specifically is formed into a rectangular tube shape whose height is smaller than a width here, it is not essential. A (particularly substantially rectangular parallelepipedic) accommodation space capable of accommodating the wires 12 is formed in the wire accommodating portion 22. Further, the wire draw-out ports 23 for drawing out the one or more wires 12 to outside are formed on substantially opposite end parts of the wire accommodating portion 22. Here, the wire draw-out port 23 particularly is a rectangular or polygonal opening.

More specifically, the wire accommodating portion 22 includes the protector main body portion 24 and the at least one lid portion 30.

The protector main body portion 24 particularly is a member molded of resin or the like and includes a bottom plate portion 25 (as a particular base plate portion) and one or more, particularly a pair of side wall portions 28.

The bottom plate portion 25 particularly substantially is in the form of a long and narrow plate. The bottom plate portion 25 may be bent in a width and/or thickness direction thereof at an intermediate part in an extending direction thereof.

Specifically, the pair of side wall portions 28 are formed to stand toward one principal surface side of the bottom plate portion 25 from (particularly substantially opposite side parts of) the bottom plate portion 25. Note that although the pair of side wall portions 28 stand in a posture at an angle different from 0° or 180°, preferably substantially perpendicular to the bottom plate portion 25 here, the side wall portions 28 and the bottom plate portion 25 may be connected via curved parts.

Intermediate parts of the wires 12 in the extending direction ED can be at least partly accommodated in a space substantially enclosed or defined by the bottom plate portion 25 and the one or more, particularly pair of side wall portions 28.

One or more fixing projecting portions 26 are formed on (particularly an opening end part of) the bottom plate portion 25 particularly where the wire draw-out port 23 is formed. These fixing projecting portions 26 are described in detail later in connection with the wire fixing piece 40.

Further, one or more lock receiving portions 29 are provided on the one or more side wall portions 28, particularly on parts of outer surfaces of the pair of side wall portions 28 on a side substantially opposite to the bottom plate portion 25. The lock receiving portion 29 includes an opening 29h penetrating in a direction perpendicular to the bottom plate portion 25 and at least one lock piece 32 of the lid portion 30 to be described later is locked and fixed to the lock receiving portion 29 by being at least partly inserted into this opening 29h.

The lid portion 30 particularly is a member molded of resin or the like and/or configured to be mountable on the protector main body portion 24 to at least partly close an opening facing the bottom plate portion 25. Here, the lid portion 30 particularly substantially is in the form of a long and narrow piece similarly to the bottom plate portion 25 and/or configured to particularly substantially close the entire opening of the protector main body portion 24 on the side substantially opposite to the bottom plate portion 25.

One or more lock pieces 32 are provided to project at one or more positions respectively corresponding to the above one or more lock receiving portions 29 particularly on substantially opposite side parts of the lid portion 30. The lock piece 32 particularly includes a plate-like portion 33 projecting from (particularly the side part of) the lid portion 30 substantially toward the protector main body portion 24 and at least one lock protrusion 34 projecting on (particularly an outer surface of a tip part of) the plate-like portion 33. The lock protrusion 34 particularly is formed into a shape whose height is gradually reduced toward a tip side of the lock piece 32. When the lock pieces 32 at least partly are inserted into the openings 29h of the lock receiving portions 29, the lock protrusions 34 retain and lock (particularly peripheral edge parts of) the openings 29h while coming out of the openings 29h. In this way, the lock pieces 32 and the lock receiving portions 29 are locked and the lid portion 30 is mounted or fixed on the protector main body portion 24.

Thus, the wire draw-out port 23 on the end part of the wire accommodating portion 22 is surrounded on plural (e.g. four) sides by the protector main body portion 24 and the lid portion 30.

Note that it is not essential to provide the lid portion 30. Accordingly, the wire accommodating portion may be left open on the side opposite to the bottom plate portion.

The wire fixing piece 40 particularly is a member molded of resin or the like separately from the above wire accommodating portion 22 and unitable with or connectable to the wire draw-out port 23 in a state fixed at a certain (predetermined or predeterminable) position in the extending direction ED of the wires 12 by the binding member 18.

More specifically, the wire fixing piece 40 substantially is in the form of a plate as a whole and particularly includes at least one bound portion 42 and at least one wide portion 44.

The bound portion 42 particularly substantially is a plate-like part to be bound and fixed to the one or more wires 12. The bound portion 42 preferably has a width smaller than an outer diameter of a bundle of the plurality of wires 12. This enables a force of the binding member 18 for holding the one or more, particularly the plurality of wires 12 in a bundled state to effectively act and particularly the wires 12 to be more reliably fixed in the bundled state at the certain position when the binding member 18 is wound on or provided on or at least partly around the bundle of the wires 12 and the bound portion 42.

Further, at least one part (particularly an edge part) of the bound portion 42 (particularly on a side substantially opposite to the wide portion 44) is formed into at least one retaining portion 43 projecting toward one principal surface side of the bound portion 42. The binding member 18 is fixed (particularly wound) on a part of the bound portion 42 inwardly of the retaining portion 43. In this way, the binding member 18 is caught by the retaining portion 43, with the result that the fall-off of the binding member 18 from the bound portion 42 is suppressed.

The wide portion 44 particularly is a substantially plate-like part integrally or unitarily formed to (particularly one end part of) the bound portion 42 to substantially spread or extend on the same plane. The wide portion 44 particularly is formed to be wider than the bound portion 42. Preferably, the wide portion 44 is formed to have a width larger than the outer diameter of the bundle of the plurality of wires 12. This causes one or more opposite end parts of the wide portion 44 to protrude laterally outwardly from the bundle of the wires 12 with the bound portion 42 fixed to the bundle of the wires 12.

The one or more fixing projecting portions 26 are formed on one of the wide portion 44 and/or the wire draw-out port 23 of the wire accommodating portion 22 and the wire fixing recesses 46 are formed on the other.

Here, the fixing projecting portions 26 particularly are formed on the protector main body portion 24 of the wire accommodating portion 22 and the wire fixing recesses 46 are formed on the wide portion 44.

More specifically, one or more, particularly a pair of fixing projecting portions 26 are formed on (particularly opposite side parts of an end part of) the bottom plate portion 25 of the protector main body portion 24 where the wire draw-out port 23 is formed.

The one or more fixing projecting portions 26 particularly are in the form of flat plates extending substantially along an extending direction of the side wall portions 28. This enables the wire fixing piece 40 to be held in a constant posture as much as possible in a state where the fixing projecting portions 26 at least partly are inserted and fitted in wire fixing recesses 46. Of course, the fixing projecting portions 26 may be in the form of round bars or rectangular bars or any other suitable shape.

A height of the fixing projecting portions 26 particularly is set to be substantially equal to or smaller (slightly smaller) than that of the side wall portions 28. This makes tip sides of the fixing projecting portions 26 difficult to come out of the wire fixing recesses 46 in a state where the fixing projecting portions 26 are inserted in the wire fixing recesses 46. Of course, the height of the fixing projecting portions 26 may be smaller than in the above example.

Further, the tip parts of the fixing projecting portions 26 particularly are formed to be gradually narrower and thinner toward the tip sides. This enables the fixing projecting portions 26 to be easily inserted into the wire fixing recesses 46. Of course, the tip parts of the fixing projecting portions 26 may be shaped to have the same dimensions as the remaining parts.

Further, opening parts of the wire fixing recesses 46 substantially facing the bottom plate portion 25 particularly may be shaped to be gradually wider toward the bound portion 25. Further, the fixing projecting portions 26 particularly may be press-fitted into or engaged with the wire fixing recesses 46, thereby being retained. Furthermore, one or more lock projections for retaining and locking the wire fixing recesses 46 in a state where the fixing projecting portions 26 at least partly are inserted to the backs of the wire fixing recesses 46 particularly may be provided to project on the fixing projecting portions 26.

Further, the one or more, particularly the pair of fixing projecting portions 26 are provided at positions spaced apart from the side wall portion(s) 28. An interval between the pair of fixing projecting portions 26 particularly is set to be substantially equal to or larger than the outer diameter of the bundle of the wires 12. This enables the bundle of the wires 12 to be arranged particularly between the pair of fixing projecting portions 26.

The wire fixing recesse(s) 46 particularly is/are formed at positions substantially corresponding to the (pair of) fixing projecting portion(s) 26 particularly on substantially opposite side parts of the wide portion 44.

The wire fixing recesses 46 are formed into (particularly substantially rectangular) through holes. The wire fixing recesses 46 are preferably so shaped and dimensioned that the fixing projecting portions 26 are fitted thereinto as closely as possible.

Note that parts at outer side(s) of the wire fixing recess(es) 46 located on the side of the bottom plate portion 25 particularly is/are formed into protrusion(s) 48 particularly substantially projecting about the same distance as the retaining portion 43. Thus, when the wire fixing piece 40 is arranged on the bottom plate portion 25, the retaining portion 43 and the one or more, particularly the pair of protrusions 48 particularly are arranged in contact with the upper surface of the bottom plate portion 25.

When the one or more, particularly the pair of fixing projecting portions 26 are inserted and arranged in the one or more, particularly the pair of wire fixing recesses 46, the wire fixing piece 40 is fixed at the certain (predetermined or predeterminable) position relative to the wire draw-out port 23.

In this state, the positions of the pair of fixing projecting portions 26 particularly are so set that at least a part of the binding member 18 wound on the bound portion 42 and the wires 12 is arranged in the wire accommodating portion 22. Here, the pair of fixing projecting portions 26 particularly are formed at positions where the pair of wire fixing recesses 46 are arranged in a state where an end part of the bound portion 42 substantially is arranged in alignment with an edge part of the wire draw-out port 23. Thus, when the pair of fixing projecting portions 26 at least partly are inserted and arranged into the wire fixing recesses 46 and the wire fixing piece 40 is united with the wire accommodating portion 22, the binding member 18 binding the bound portion 42 and the wires 12 is arranged in the wire draw-out port 23 of the wire accommodating portion 22.

The binding member 18 is a member for binding and fixing the wires 12 and the wire fixing piece 40. Here, the binding member 18 particularly is configured by an adhesive tape. The adhesive tape is such that an adhesive layer is formed on one principal surface of a band- or strip-like base material made e.g. of resin. By winding the adhesive tape substantially around the wires 12 and the bound portion 42 in a state where the wire fixing piece 40 substantially extends along the wires 12, the wires 12 and the wire fixing piece 40 are bound and fixed. Besides the adhesive tape, a binding band, cable clip or the like may be alternatively or additionally used as the binding member 18.

An operation of manufacturing the wires with protector 10 is described.

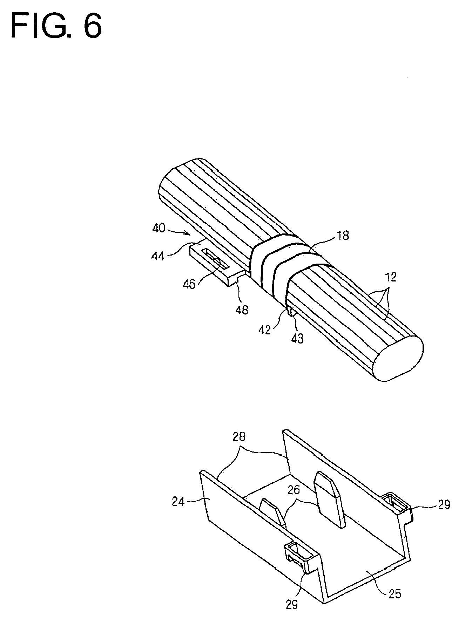

First, the bound portion 42 of the wire fixing piece 40 is arranged substantially along the wires 12 particularly substantially at a position below the outer peripheries of the wires 12 (here, bundle of the plurality of wires 12) at a certain (predetermined or predeterminable) position in the extending direction ED. Then, as shown in FIG. 6, the binding member 18 is fixed to the wire(s) 12 and the bound portion 42, particularly the adhesive tape as the binding member 18 is wound around the wires 12 and the bound portion 42. This binding operation can be performed before the one or more wires 12 at least partly are accommodated into the protector main body portion 24. Of course, it is also possible to perform the above binding operation in a state where parts of the wires 12 to be bound are taken out of the protector main body portion 24 with the wires 12 partly accommodated in the protector main body portion 24.

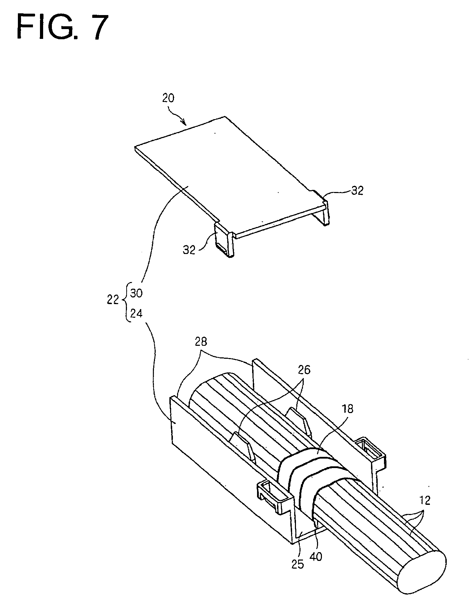

Thereafter, as shown in FIG. 7, the one or more wires 12 are arranged in the accommodation space in the protector main body portion 24 and the one or more, particularly the pair of fixing projecting portions 26 of the bottom plate portion 25 of the protector main body portion 24 at least partly are inserted into the one or more wire fixing recesses 46 of the wire fixing piece 40 to unite or join the wire fixing piece 40 and the protector main body portion 24. In this way, specified (predetermined or predeterminable) parts of the wires 12 in the extending direction ED are supported at a certain position on (particularly one end side of) the protector main body portion 24.

Then, the one or more lock pieces 32 at least partly are inserted into the one or more lock receiving portions 29 to be locked and fixed, thereby mounting the lid portion 30 on or to the protector main body portion 24. In this way, the wires with protector 10 are manufactured.

According to the protector 20 and the wires with protector 10 configured as described above, the wire fixing piece 40 can be fixed to the protector main body portion 24 after the one or more wires 12 are fixed to the wire fixing piece 40 by the binding member 18. Thus, the operation of binding the wire fixing piece 40 by the binding member 18 can be performed without being interfered by the wire accommodating portion 22. In addition, the one or more wires 12 can be reliably positioned at the wire draw-out port 23 by fixing the wire fixing piece 40 to the protector main body portion 24. Further, since the one or more wires 12 are bound and fixed to the wire fixing piece 40 by the adhesive tape, they can be relatively inexpensively fixed.

Further, since the binding member 18 particularly is protected by being at least partly accommodated into the wire accommodating portion 22, the state where the wires 12 and the wire fixing piece 40 are bound or maintained or fixed by the binding member 18 is more reliably maintained. In this way, the state where the wires 12 are more reliably fixed at the certain position with respect to the wire accommodating portion 22 is maintained.

Note that it is not essential to accommodate the entire binding member 18 in the wire accommodating portion 22. If at least a part of the binding member 18 is accommodated in the wire accommodating portion 22, that part can be protected by the wire accommodating portion 22.

Further, the wire accommodating portion 22 is composed of or comprises the protector main body portion 24 and the lid portion 30. Thus, the wires 12 can be easily at least partly accommodated in the protector main body portion 24 and the wire fixing piece 40 can be easily fixed in the protector main body portion 24. Since the wire draw-out port 23 particularly is closed on plural (e.g. four) sides by the protector main body portion 24 and the lid portion 30, at least parts of the wires 12 and the binding member 18 can be more reliably protected. Particularly, the exposure of the binding member 18 to water can be suppressed by the lid portion 30.

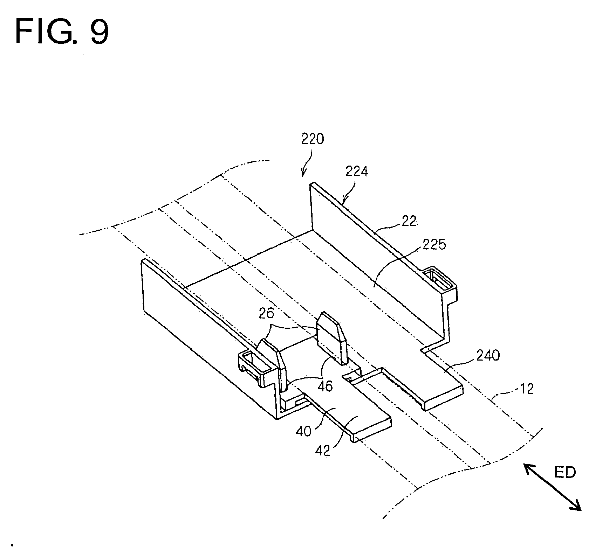

Of course, it is not essential to arrange at least the part of the binding member 18 in the wire accommodating portion 22 and the entire binding member may be exposed from the wire accommodating portion (see later-described modification shown in FIG. 9).

Further, since the one or more fixing projecting portions 26 particularly are formed in the wire accommodating portion 22 and the one or more wire fixing recesses at least partly fittable to the fixing projecting portions 26 are formed on (particularly the side parts of) the wide portion 44 of the wire fixing piece 40, the wire fixing piece 40 can be fixed to the wire accommodating portion 22 particularly by arranging the fixing projecting portion(s) 26 into the wire fixing recess(es) 46 with the bound portion 42 and the wire(s) 12 bound and fixed. At this time, since it is sufficient to arrange the fixing projecting portion(s) 26 into the wire fixing recess(es) 46 formed on (particularly the side parts of) the wide portion 44 wider than the bound portion 42, the fixing operation by this arrangement can be easily performed.

Note that it is not essential to form the fixing projecting portions 26 on the bottom plate portion 25 and the wire fixing recesses 46 on the wire fixing piece 40. Conversely, one or more wire fixing recesses may be formed on the bottom plate portion and one or more fixing projecting portions projecting toward the bottom plate portion and to be arranged in the wire fixing recesses may be formed on the wire fixing piece.

Further, although the pair of fixing projecting portions and the pair of wire fixing recesses particularly are formed here, it is not always necessary. For example, one fixing projecting portion may be formed on one side part of the bottom plate portion and only one wire fixing recess may be formed on one side part of the wire fixing piece. In this case, the other side part of the wire fixing piece (i.e. where particularly no wire fixing recess is formed) is or may be preferably pressed against the inner surface of the side wall portion.

Further, although the wire fixing recess particularly is formed as a hole penetrating through the wide portion, it is not always necessary. A bottomed recess recessed from the bottom plate portion side may be formed on the wide portion and a fixing projecting portion formed on the bottom plate portion and having a small height may be at least partly fitted into the bottomed recess. Further, the wire fixing recess may be open laterally of the wide portion.

Modifications based on the above embodiment are described.

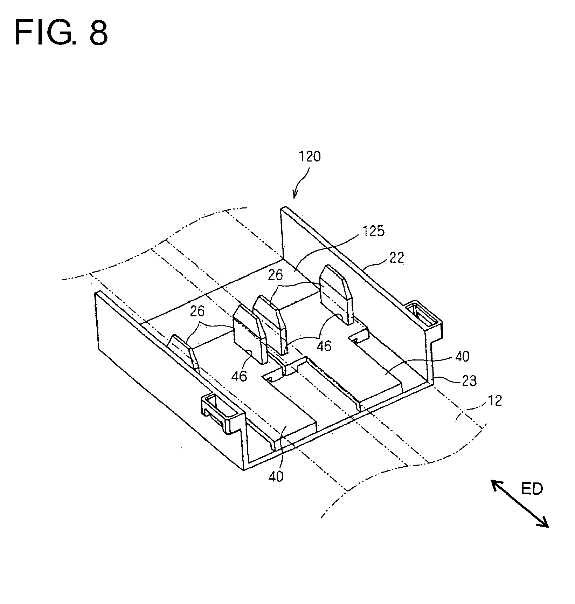

First, in a protector 120 according to a modified embodiment shown in FIG. 8, a plurality of (here, two) wire fixing pieces 40 are provided and can be united with a wire draw-out port 23 of a wire accommodating portion 22 particularly while being arranged substantially side by side. Note that the outline of bundles of wires 12 is shown in FIGS. 8 and 9.

More specifically, a bottom plate portion 125 (as a particular base plate portion) corresponding to the bottom plate portion 25 is formed to be wider. A plurality of (two) pairs of fixing projecting portions 26 are formed particularly substantially side by side in a width direction on the bottom plate portion 125. It should be understood that the plurality of (two) pairs of fixing projecting portions 26 may also be arranged offset along the extending direction ED of the wires 12.

Further, the wires 12 (bundle of the wires 12) are bound and fixed to each of the plurality of wire fixing pieces 40 in the same manner as above. Each pair of fixing projecting portions 26 are inserted into a pair of wire fixing recesses 46 of the corresponding wire fixing piece 40. In this way, the pair of wire fixing pieces 40 are united and fixed particularly substantially side by side to the wire draw-out port 23.

According to this example, functions and effects similar to those of the above embodiment can be obtained.

In addition, in the case of supporting a multitude of wires 12 on the flat wire accommodating portion 22, there is an advantage of being able to more reliably fix the multitude of wires 12 at a certain (predetermined or predeterminable) position.

Specifically, in the case of supporting a multitude of wires on a flat wire accommodating portion, it is considered to arrange a plurality of wires substantially side by side in a flat state on a wide wire fixing piece and bind and fix the wires. In this case, in a widthwise central part of the wide wire fixing piece, a binding force by a binding member is hard to act and the wires are easily displaced in that part.

Contrary to this, in this modification, the multitude of wires 12 can be divided into separate bundles and each bundle can be bound and fixed to the separate wire fixing piece 40. In this case, since each wire fixing piece 40 can be formed to be relatively narrow, the wires 12 can be more reliably supported at a certain (predetermined or predeterminable) position on each wire fixing piece 40. As a result, the multitude of wires 12 can be more reliably fixed at the certain position by the plurality of wire fixing pieces 40.

In addition, since the wire fixing pieces 40 particularly can be separately handled in binding and fixing the respective wire fixing pieces 40 and the wires 12, one binding operation does not interfere with the other binding operation.

Further, in a protector 220 according to a further modification shown in FIG. 9, an integrated wire fixing piece 240 integrally or unitarily formed to a wire draw-out port 23 is further provided separately from the above wire fixing piece 40. The wire fixing piece 40 can be united with the wire draw-out port 23 on a side adjacent to the integrated wire fixing piece 240.

More specifically, a bottom plate portion 225 (as a particular base plate portion) corresponding to the bottom plate portion 25 is formed to be wider. The integrated wire fixing piece 240 extends outward (or along the extension direction ED of the wires 12) from a position of an end part of the bottom plate portion 225 near one side part. The integrated wire fixing piece 240 is an integrally or unitarily molded part in forming a protector main body portion 224 including the bottom plate portion 225 and the like. The integrated wire fixing piece 240 itself is configured similarly to a bound portion 42.

Further, a pair of fixing projecting portions 26 are provided to project at positions of (particularly the upper or inner surface of) the bottom plate portion 225 near the other side part. By inserting this pair of fixing projecting portions 26 into a pair of wire fixing recesses 46, the wire fixing piece 40 is united with the wide portion 23.

Note that the pair of fixing projecting portions 26 particularly are formed at positions of the bottom plate portion 225 near the end part and the bound portion 42 is arranged to project from the bottom plate portion 225 similarly to the integrated wire fixing piece 240 here. Of course, the bound portion 42 may be arranged at a position to be accommodated in the wire draw-out port 23 as in the above embodiment. The arrangement of the integrated wire fixing piece 240 and the wire fixing piece 40 in an adjacent positional relationship also includes such a positional relationship.

Some of a multitude of wires 12 are bound and fixed to the integrated wire fixing piece 240. Further, the wire fixing piece 40 is united with the wide portion 23 by inserting the one or more, particularly the pair of fixing projecting portions 26 into the one or more, particularly the pair of wire fixing recesses 46 after the others of the multitude of wires 12 are bound and fixed to the bound portion 42.

According to this further modification, functions and effects similar to those of the above embodiment can be obtained for the configuration for binding and fixing the wires 12 and the wire fixing piece 40.

Further, since the multitude of wires 12 are divided, some of them are or can be fixed to the integrated wire fixing piece 24 and the others are or can be fixed to the wire fixing piece 40, the multitude of the wires 12 can be more reliably fixed at a certain (predetermined or predeterminable) position as in the above previous modification. Further, since the wire fixing piece 40 and the integrated wire fixing piece 240 can be separately handled in binding and fixing the wire fixing piece 40 or the integrated wire fixing piece 240 and the wires 12, one binding operation does not interfere with the other binding operation.

Note that the respective configurations described in the above embodiment and each modification can be appropriately combined unless they contradict each other.

Accordingly, to enable a wire to be easily and reliably positioned and fixed in a protector, a protector 20 includes a wire accommodating portion 22 and at least one wire fixing piece 40. The wire accommodating portion 22 is formed with an accommodation space capable of at least partly accommodating wires 12 and a wire draw-out port 23 for drawing out the wires 12 at least partly accommodated in the accommodation space to outside. At least one wire fixing piece 40 is formed separately from the wire accommodating portion 22 and unitable with or mountable to the wire draw-out port 23 in a state fixed at a certain position in an extending direction ED of the wires 12 by a binding member 18.

Although this invention has been described in detail above, the above description is illustrative in all aspects and this invention is not limited thereby. It should be understood that unillustrated numerous modifications can be made without departing from the scope of this invention as defined in the claims.

Reference Signs
- 10: wires with protector
- 12: wire
- 18: binding member
- 20, 120, 220: protector
- 22: wire accommodating portion
- 23: wire draw-out port
- 24, 224: protector main body portion
- 25, 125, 225: bottom plate portion (base plate portion)
- 26: fixing projecting portion
- 28: side wall portion
- 30: lid portion
- 40: wire fixing piece
- 42: bound portion
- 44: wide portion
- 46: wire fixing recess
- 240: integrated wire fixing piece

## Claims

1. A protector (20), comprising:
a wire accommodating portion (22) formed with an accommodation space capable of at least partly accommodating at least one wire (12) and a wire draw-out port (23) for drawing out the wire (12) accommodated in the accommodation space to outside; and
at least one wire fixing piece (40) formed separately from the wire accommodating portion (22) and unitable with the wire draw-out port (23) in a state fixed at a certain position in an extending direction (ED) of the wire (12) by at least one binding member (18).

2. A protector according to claim 1, wherein the wire fixing piece (40) is unitable with the wire accommodating portion (22) at a position where at least a part of the binding member (18) for binding and fixing the wire (12) and the wire fixing piece (40) is arranged in the wire accommodating portion (22).

3. A protector according to any one of the preceding claims, wherein the wire accommodating portion (22) includes:
a protector main body portion (24; 224) with a base plate portion (25; 125; 225) and one or more side wall portions (28) standing from the base plate portion (25; 125; 225); and
a lid portion (30) to be mounted on the protector main body portion (24; 224) to at least partly close an opening of the protector main body portion (24; 224).

4. A protector according to any one of the preceding claims, wherein:
the wire fixing piece (40) includes a bound portion (42) to be bound and fixed to the wire (12) and a wide portion (44) wider than the bound portion (42); and
at least one fixing projecting portion (26) is formed on one of a side part of the wide portion (44) and the wire accommodating portion (22) and a wire fixing recess (46), in which the fixing projecting portion (26) is arrangeable, is formed on the other.

5. A protector according to any one of the preceding claims, wherein:
a plurality of the wire fixing pieces (40) are provided; and
the plurality of wire fixing pieces (40) are unitable substantially side by side with the wire draw-out port (23).

6. A protector according to any one of the preceding claims, further comprising an integrated wire fixing piece (240) integrally formed to the wire draw-out port (23).

7. A protector according to claim 6, wherein the wire fixing piece (40) is unitable with the wire draw-out port (23) on a side adjacent to the integrated wire fixing piece (240).

8. An assembly of a wire (12) with protector (20), comprising:
a protector (20) according to any one of the preceding claims;
a wire (12); and
a binding member (18) for binding and fixing the wire (12) and the wire fixing piece (40);
wherein the wire fixing piece (40) at least partly is accommodated in the accommodation space in a state where the wire fixing piece (40) is united with the wire draw-out port (23) and the wire (12) is drawn out to outside from the wire draw-out port (23).

9. A method of assembling a wire (12) with a protector (20), comprising:
binding and fixing at least one wire (12) to at least one wire fixing piece (40) of the protector (20);
at least partly accommodating the wire fixing piece (40) in an accommodation space of the protector (20) thereby uniting the wire fixing piece (40) with the wire draw-out port (23) of the protector (20); and
drawing out the wire (12) to outside from the wire draw-out port (23).

10. A method according to claim 9, wherein the wire fixing piece (40) is united with the wire accommodating portion (22) at a position where at least a part of the binding member (18) for binding and fixing the wire (12) and the wire fixing piece (40) is arranged in the wire accommodating portion (22).

11. A method according to claim 9 or 10, wherein in the accommodating step the wire (12) at least partly is enclosed by a protector main body portion (24; 224) with a base plate portion (25; 125; 225) and one or more side wall portions (28) standing from the base plate portion (25; 125; 225); and a lid portion (30) is mounted on the protector main body portion (24; 224) to at least partly close an opening of the protector main body portion (24; 224).

12. A method according to any one of the preceding claims 9 to 11, wherein the wire fixing piece (40) includes a bound portion (42) to be bound and fixed to the wire (12) and a wide portion (44) wider than the bound portion (42); and wherein at least one fixing projecting portion (26) is formed on one of a side part of the wide portion (44) and the wire accommodating portion (22) and a wire fixing recess (46), in which the fixing projecting portion (26) is arrangeable, is formed on the other.

13. A method according to any one of the preceding claims 9 to 12, further comprising providing a plurality of the wire fixing pieces (40); and uniting the plurality of wire fixing pieces (40) substantially side by side with the wire draw-out port (23).

14. A method according to any one of the preceding claims 9 to 13, further comprising integrally forming an integrated wire fixing piece (240) to the wire draw-out port (23).

15. A method according to claim 14, wherein the wire fixing piece (40) is united with the wire draw-out port (23) on a side adjacent to the integrated wire fixing piece (240).
